# EUROPÄISCHE PATENTSCHRIFT

(11) **EP 2 342 807 B1**
(45) Veröffentlichungstag und Bekanntmachung des Hinweises auf die Patenterteilung: **18.03.2015**
(21) Anmeldenummer: 09783387.5
(22) Anmeldetag: 24.09.2009
(51) Int. Cl.: H02M 1/36, H02M 3/158, H02M 7/5387

(54) **WANDLER MIT MINDESTENS EINEM SELBSTLEITENDEN SCHALTER**
CONVERTER WITH AT LEAST ONE NORMALLY-ON SWITCH
CONVERTISSEUR AVEC AU MOINS UN COMMUTATEUR NORMALEMENT OUVERT

(30) Priorität: 24.09.2008 DE 102008042339
(43) Veröffentlichungstag der Anmeldung: 13.07.2011
(73) Patentinhaber: SMA Solar Technology AG, 34266 Niestetal (DE)
(72) Erfinder: FRIEBE, Jens, 37176 Nörten-Hardenberg (DE); PRIOR, Oliver, 34431 Marsberg (DE)
(74) Vertreter: REHBERG HÜPPE + PARTNER
(86) Internationale Anmeldenummer: PCT/EP2009/062402
(87) Internationale Veröffentlichungsnummer: WO 2010/034785

(56) Entgegenhaltungen:
- EP-A2- 1 928 077
- JP-A- 2007 159 364
- US-A1- 2004 004 404
- US-A1- 2005 286 281

## Beschreibung

### TECHNISCHES GEBIET DER ERFINDUNG

Die Erfindung bezieht sich auf einen Wandler für eine zwischen zwei Eingangsleitungen anliegende Gleichspannung mit einer elektrischen Schaltung, die mindestens einen Halbleiterschalter und eine Steuerung, die den Halbleiterschalter im Betrieb des Wandlers taktet, indem sie seinen Steueranschluss mit Steuerspannungen ansteuert, aufweist, und mit den weiteren Merkmalen des Oberbegriffs des unabhängigen Patentanspruchs 1.

Der Wandler kann ein DC/DC-Wandler, wie beispielsweise ein Tiefsetz- oder Hochsetzsteller sein.

Insbesondere bezieht sich die Erfindung auf DC/AC-Wandler, bei denen eine Wechselrichterbrücke zwischen zwei Eingangsleitungen geschaltet ist und die auch als Wechselrichter bezeichnet werden.

Ganz insbesondere bezieht sich die vorliegende Erfindung auf Wechselrichter zur Einspeisung von elektrischer Energie von einer Gleichspannungsquelle in ein Wechselspannungsnetz. Noch spezieller kann die Gleichspannungsquelle dabei eine Photovoltaikanlage sein.

Ein Wechselrichter, wie er insbesondere Gegenstand der vorliegenden Erfindung ist, kann aber auch zu anderen Zwecken verwendet werden, wobei die Frequenz der Ausgangswechselspannung, auf die der Wechselrichter richtet, konstant oder variabel sein kann, um beispielsweise einen Wechselspannungsmotor anzusteuern.

Weiterhin kann ein erfindungsgemäßer Wechselrichter für einphasigen Wechselstrom oder mehrphasigen, insbesondere dreiphasigen Drehstrom vorgesehen sein, selbst wenn im Folgenden nur ein einphasiger Wechselrichter beschrieben ist.

Auch eine Kombination eines erfindungsgemäßen DC/AC-Wandlers innerhalb eines insgesamt als Wechselrichter verwendeten Aufbaus mit weiteren elektrischen oder elektronischen Einheiten, wie beispielsweise einem vorgeschalteten erfindungsgemäßen oder konventionellen Hochsetzsteller oder dergleichen ist möglich.

### STAND DER TECHNIK

Ein Wechselrichter mit einer H-förmigen Wechselrichterbrücke zwischen zwei Eingangsleitungen, wobei die Wechselrichterbrücke Halbleiterschalter aufweist, und mit einer die Halbleiterschalter im Betrieb des Wechselrichters taktenden Steuerung ist z.B. aus der DE 10 2004 030 912 B3 und der parallelen US 2005/0286281 A1 bekannt. Hier sind die Halbleiterschalter als MOSFET-Halbleiterbauelemente, d. h. als Metall-Oxid-Halbleiter-Feldeffekttransistor ausgebildet. Derartige Feldeffekttransistoren sind selbstsperrend, d. h. ohne Ansteuerung ihres Steueranschlusses leiten sie nicht. Dies ist insoweit vorteilhaft, als dass die gesamte Wechselrichterbrücke ohne Ansteuerung der Steueranschlüsse der Halbleiterschalter nicht leitet und damit einen Kurzschluss zwischen den Eingangsleitungen und auch eines ausgangsseitigen Wechselspannungsnetzes verhindert. Speziell ist bei dem aus der DE 10 2004 030 912 B3 bekannten Wechselrichter in einer der Eingangsleitungen ein zusätzlicher, als MOSFET-Halbleiterbauelement ausgebildeter Halbleiterschalter vorgesehen, der ebenso wie die in den an die andere Eingangsleitung angeschlossenen Zweigen der Wechselrichterbrücke vorgesehenen Halbleiterschalter mit einer höheren Frequenz getaktet wird, während die beiden anderen Halbleiterschalter der Wechselrichterbrücke mit einer niedrigeren Frequenz getaktet werden. Diese niedrigere Frequenz entspricht dabei der Frequenz, auf die der Wechselrichter richtet, während die höhere Frequenz genutzt wird, um den erzeugten Wechselstrom mittels Pulsbreitenmodulation zu formen. Alle als MOSFET-Halbleiterbauelemente ausgebildeten Halbleiterschalter sind bei dem bekannten Wechselrichter mit antiparallelen Dioden versehen.

Über einen Rekord für den Wirkungsgrad eines Wechselrichters wird in einer Presseinformation Nr. 02/08 des Fraunhofer-Instituts für Solare Energiesysteme ISE vom 15. Januar 2008 (http://www.ise.fhg.de/presse-und-medien/presseinformationen-pdf/0208_ISE_PI_d_Rekord_Wechselrichterwirkungsgrad.pdf) berichtet. Bei dem Wechselrichter, der Gegenstand der Presseinformation ist, wurden MOSFETs auf Basis des Halbleiters Siliziumkarbid (SiC) verwendet. Von SiC-Halbleiterbauelementen ist nicht nur bekannt, dass sie sehr gute Eigenschaften wie niedrige Durchlass- und Schaltverluste aufweisen, sondern auch, dass sie jenseits des Temperaturbereichs, in dem Siliziumhalbleiterbauelemente funktionsfähig sind, d. h. bis zu 600°C, einsetzbar sind. Bei MOSFETs auf der Basis von SiC handelt es sich jedoch um nicht allgemein verfügbare Halbleiterbauelemente, die daher zumindest derzeit noch keinen umfangreichen Einsatz bei Wechselrichtern finden können und die in der derzeitigen Ausführung wiederum eine Temperaturbegrenzung aufweisen.

Zu vertretbaren Bedingungen verfügbar sind hingegen Sperrschicht-Feldeffekttransistoren (JFETs) auf SiC-Basis. JFETs sind jedoch im Allgemeinen selbstleitende Halbleiterbauelemente, d. h. sie leiten, ohne dass eine Spannung an ihrem Steueranschluss anliegt. Um diesen Nachteil zu kompensieren, ist eine sogenannte Kaskodenschaltung bekannt, bei der ein JFET mit einem MOSFET kombiniert ist und bei der eine Eingangsspannung auf den Steueranschluss des JFETs und über den MOSFET zur Source des JFETs verzweigt ist. Mittels Ansteuerung des Steueranschlusses des MOSFETs wird der JFET bei der Kaskodenschaltung indirekt geschaltet. Dabei ist von Vorteil, dass das Sperrvermögen des SiC-JFET genutzt wird und der MOSFET nur eine geringe Sperrspannungsfestigkeit aufweisen muss. Allerdings fließt der Leistungsstrom auch über den MOSFET, welcher das Schaltverhalten der gesamten Kaskode maßgeblich beeinflusst, so dass eine Kaskode mit allen weiteren Nachteilen eines MOSFETs gegenüber einem JFET belastet ist.

Bei einem aus der EP 2 006 991 A1 bekannten Wechselrichter sind die selbstleitenden Halbleiterschalter der Wechselrichterbrücke jeweils in einer Kaskodenschaltung vorgesehen. Wie voranstehend erläutert wurde, können so die Vorteile eines JFET nur sehr begrenzt ausgenutzt werden, insbesondere die Vorteile eines JFET auf SiC-Basis, da dessen hohe Temperaturbeständigkeit angesichts der geringeren Temperaturbeständigkeit des MOSFETs in derselben Kaskode nicht ausgenutzt werden kann. Zudem ist die Anzahl der Halbleiterschalter aufgrund eines JFETs und eines MOSFETs für jede schaltende Einheit doppelt so groß wie eigentlich nötig.

Aus der DE 10 2006 029 928 B3 ist eine elektronische Schalteinrichtung mit zumindest zwei Halbleiterschaltelementen bekannt, bei denen es sich um einen selbstleitenden Halbleiterschalter und einen selbstsperrenden Halbleiterschalter handelt die in einer Reihenschaltung zusammengefasst sind. Dabei weist die Schalteinrichtung nach außen zwei Lastanschlüsse an die Reihenschaltung und zwei Steueranschlüsse zur Ansteuerung der beiden Halbleiterschalter durch eine Steuerung auf. Die Steuerung kann so den selbstleitenden Halbleiterschalter durch Ansteuerung seines Steueranschlusses takten und dabei den selbstsperrenden Halbleiterschalter dauerhaft geschlossen halten, um die günstigen Schalteigenschaften des selbstleitenden Halbleiterschalters auszunutzen. Dabei ist ein Entkopplungsmittel vorgesehen, das die beiden Halbleiterschalter erst dann entkoppelt, wenn die Steuerung den selbstleitenden Halbleiterschalter tatsächlich ansteuert. Bis dahin sind die beiden Halbleiterschalter nach Art einer Kaskode gekoppelt.

Ein Wandler für eine zwischen zwei Eingangsleitungen anliegende Gleichspannung mit den Merkmalen des Oberbegriffs des unabhängigen Patentanspruchs 1 ist aus der JP 2007 159364 A bekannt. Hier ist zwischen Eingangsleitungen ein selbstsperrender Schalter mit einer aus selbstleitenden Schaltern aufgebauten Wechselrichterbrücke in Form einer Vollbrücke in Reihe geschaltet. Dabei verzweigt sich die Eingangsleitung, in der der selbstsperrende Halbleiterschalter angeordnet ist, zu den beiden Zweigen der Wechselrichterbrücke.

Aus der US 2004/0004404 A1 ist ein Wandler mit einer aus selbstleitenden Halbleiterschaltern aufgebauten Wechselrichterbrücke in Form einer Vollbrücke bekannt. Dabei führen von einer der Eingangsleitungen des Wandlers Sperrpotentialleitungen zu den Steueranschlüssen einer Teilmenge der selbstleitenden Halbleiterschalter der Wechselrichterbrücke. Die Halbleiterschalter dieser Teilmenge sind so ausgewählt, dass sie die Wechselrichterbrücke sperren, wenn sie selbst durch Ansteuerung ihrer Steueranschlüsse gesperrt sind. In den Sperrpotentialleitungen sind Widerstände angeordnet.

Aus der EP 1 928 077 A2 ist die Verwendung von selbstleitenden Halbleiterschaltern in Form von SiC JFETs als Schalter in DC/DC-Wandlern, wie beispielsweise Hochsetzstellern, und zum Aufbau von Wechselrichterbrücken in Form von Vollbrücken bekannt.

### AUFGABE DER ERFINDUNG

Der Erfindung liegt die Aufgabe zugrunde, einen Wandler für eine zwischen zwei Eingangsleitungen anliegende Gleichspannung der eingangs beschriebenen Art aufzuzeigen, bei dem die Vorteile von kostengünstig verfügbaren Halbleiterbauelementen auf SiC-Basis noch weitergehend nutzbar sind.

### LÖSUNG

Die Aufgabe der Erfindung wird durch einen Wandler mit den Merkmalen des unabhängigen Patentanspruchs 1 gelöst. Die abhängigen Patentansprüche 2 bis 13 definieren bevorzugte Ausführungsformen des neuen Wandlers. Die abhängigen Patentansprüche 14 und 15 sind auf bevorzugte Verwendungen des neuen Wandlers in einem Wechselrichter gerichtet.

### BESCHREIBUNG DER ERFINDUNG

Bei dem neuen Wandler ist der selbstleitende Halbleiterschalter nicht nach Art einer Kaskode mit einem selbstsperrenden Halbleiterschalter in Reihe geschaltet und über einen solchen selbstsperrenden Halbleiterschalter indirekt getaktet. Vielmehr steuert die Steuerung des neuen Wandlers den Steueranschluss des selbstleitenden Halbleiterschalters direkt mit Steuerspannungen an. Um dabei einen Kurzschluss über den selbstleitenden Halbleiterschalter zu verhindern, wenn die Steuerspannungen noch nicht zur Verfügung stehen oder ausfallen, ist in mindestens einer der Eingangsleitungen des Wandlers ein Halbleiterschalter angeordnet, der ohne Ansteuerung seines Steueranschlusses selbstsperrend ist und dessen Steueranschluss die Steuerung im Betrieb des Wandlers ebenfalls mit einer Steuerspannung ansteuert. Dieser Halbleiterschalter mag damit zwar mit den Nachteilen bekannter selbstsperrender Halbleiterschalter behaftet sein, er ist aber dann, wenn der Wandler eine Teilschaltung zwischen den Eingangsleitungen mit mehreren selbstleitenden Halbleiterschalter aufweist, nur einer von mehreren Halbleiterschaltern, und er wird im laufenden Betrieb des Wandlers nicht oder zumindest nicht unter Last getaktet. Dies impliziert, dass die Steuerspannungen für den selbstleitenden und für den selbstsperrenden Halbleiterschalter im Normalfall des Betriebs der neuen Steuerung nicht gleich sind. Nicht nur dann, wenn der selbstsperrende Halbleiterschalter dauerhaft eingeschaltet bleibt, sondern auch dann, wenn er nicht unter Last getaktet wird, d. h. keine Ströme schaltet, treten keine Schaltverluste auf. Zudem kann der selbstsperrende Halbleiterschalter ganz auf eine Minimierung seiner Durchlassverluste optimiert sein. Auch die höhere Temperaturempfindlichkeit herkömmlicher selbstsperrender Halbleiterschalter gegenüber bestimmten selbstleitenden Halbleiterschaltern kommen bei dem neuen Wandler nicht zwingend zum Tragen, da der selbstsperrende Halbleiterschalter von jedem selbstleitenden Halbleiterschalter getrennt angeordnet, das heißt mit diesem nicht in einer geschlossenen Schaltungseinrichtung zusammengefasst ist und daher, ohne weiteres räumlich entfernt von allen getakteten selbstleitenden Halbleiterschaltern des Wandlers angeordnet werden kann. Da der selbstsperrende Halbleiterschalter im laufenden Betrieb des neuen Wandlers nicht oder zumindest nicht unter Last getaktet wird, bleibt die hier anfallende Verlustwärme auch bei großen, von dem Wandler übertragenen Leistungen nur gering. Solange die Steuerspannungen von der Steuerung des neuen Wandlers noch nicht vorliegen, oder wenn diese aus irgendeinem Grund ausfallen, verhindert der selbstsperrende Halbleiterschalter in der Eingangsleitung einen Kurzschlussstrom, der ansonsten z. B. über die nicht mehr angesteuerten und damit leitend werdenden selbstleitenden Halbleiterschalter einer selbstleitenden Teilschaltung zwischen den Eingangsleitungen fließen würde. Dafür wird anders als bei z. B. vier Kaskoden in einer Wechselrichterbrücke nur ein selbstsperrender Halbleiterschalter benötigt.

Die Trennung des selbstsperrenden Halbleiterschalter von jedem selbstleitenden Halbleiterschalter kann alternativ oder zusätzlich zu einer räumlichen Trennung vor allem dadurch ausgeprägt sein, dass sich die Eingangsleitung, in der der selbstsperrende Halbleiterschalter angeordnet ist, zwischen dem selbstsperrenden Halbleiterschalter und dem selbstleitenden Halbleiterschalter verzweigt. Darunter ist eine Verzweigung des Leistungsstrompfads zwischen dem selbstsperrenden Halbleiterschalter und dem selbstleitenden Halbleiterschalter zu verstehen, wobei die Verzweigung z. B. zu einem oder mehreren weiteren selbstleitenden Schaltern oder einem Puffer- oder Stützkondensator zwischen den Eingangsleitungen des Wandlers erfolgen kann. Diese Verzweigung ermöglicht es in vorteilhafter Weise, den selbstsperrenden Halbleiterschalter außerhalb jedes Freilaufstromkreises des Wandlers anzuordnen, so dass der Stromfluss durch ihn nur in einer Richtung erfolgt.

Wie bereits angedeutet weist der neue Wandler eine den oder die selbstleitenden Halbleiterschalter umfassende selbstleitende Teilschaltung zwischen den Eingangsleitungen auf. Im einfachsten Fall ist diese Teilschaltung nur der eine getaktete Schalter eines Hochsetzstellers.

Insbesondere kann der neue Wandler ein DC/AC-Wandler sein, beim dem die Teilschaltung zwischen den Eingangsleitungen eine selbstleitende Wechselrichterbrücke mit selbstleitenden Halbleiterschaltern ist. Regelmäßig sind dabei zwei selbstleitende Halbleiterschalter je Zweig der Wechselrichterbrücke vorgesehen, d.h. z. B. zwei bei einer Halbbrücke und vier bei einer Vollbrücke, wobei die selbstleitenden Halbleiterschalter je zur Hälfte in der bzw. den Leitungsabschnitten der Wechselrichterbrücke vorgesehen sind, die von der einen bzw. der anderen der Eingangsleitungen abgehen. Es versteht sich, dass bei einer Wechselrichterbrücke mit Multi-Level-Schaltung die Anzahl der Halbleiterschalter je Zweig auch bei dem neuen Wandler größer als zwei ist.

Zur Verhinderung eines Kurzschlussstroms bei ausfallenden Steuerspannungen von der Steuerung wird der hohe Sperrwiderstand der sonst von der Steuerung an ihren Steueranschlüssen angesteuerten selbstleitenden Halbleiterschaltern genutzt, indem von der Eingangsleitung vor dem selbstsperrenden Halbleiterschalter Sperrpotentialleitungen zu den Steueranschlüssen mindestens einer Teilmenge der selbstleitenden Halbleiterschalter der Teilschaltung führen. Aufgrund des Widerstands des selbstsperrenden Halbleiterschalters in der Eingangsleitung liegt dann an den Steueranschlüssen der selbstleitenden Halbleiterschalter der Teilmenge ein Sperrpotential an, das diese in ihren sperrenden Zustand schaltet. Es versteht sich, dass zur Ausnutzung dieses Effekts die Halbleiterschalter der Teilmenge, so ausgewählt sein müssen, dass sie die gesamte Teilschaltung sperren, wenn sie durch Ansteuerung ihrer Steueranschlüsse gesperrt sind.

Bei einem DC/AC-Wandler als Ausführungsform des neuen Wandlers können die Sperrpotentialleitungen zu den Steueranschlüssen von je einem selbstleitenden Halbleiterschalter je Zweig der Wechselrichterbrücke führen, wobei diese Halbleiterschalter alle in von einer der Eingangsleitungen abgehenden Leitungen der Wechselrichterbrücke angeordnet sind. Mit diesen Leitungen sind die Abschnitte der Wechselrichterbrücke zwischen der betrachteten Eingangsleitung und einem Querzweig der Wechselrichterbrücke gemeint.

Erfindungsgemäß sind in den Sperrpotentialleitungen ansteuerbare Schaltelemente, wie z. B. zusätzliche selbstleitende Halbleiterschalter angeordnet, deren Steueranschlüsse im Betrieb des neuen Wandlers von der Steuerung mit einer Steuerspannung angesteuert werden, um das Sperrpotential von den Steueranschlüssen, zu denen die Sperrpotentialleitungen führen, zu trennen.

Zusätzlich zu den ansteuerbaren Schaltelementen können die Sperrpotentialleitungen noch Widerstände enthalten.

Bei einem DC/AC-Wandler als Ausführungsform des neuen Wandlers kann die Steuerung entsprechend der Lehre der DE 10 2004 030 912 B3 einen Halbleiterschalter in einer der Eingangsleitungen ebenso wie die Halbleiterschalter, die in den von der anderen der Eingangsleitungen abgehenden Leitungen der Wechselrichterbrücke angeordnet sind, mit einer hohen Frequenz takten, während sie die Halbleiterschalter, die in den von der einen Eingangsleitung abgehenden Leitungen der Wechselrichterbrücke angeordnet sind, mit einer niedrigeren Frequenz, auf die der Wechselrichter richtet, taktet. Dabei ist der Halbleiterschalter in der einen Eingangsleitung vorzugsweise ein zusätzlicher selbstleitender Halbleiterschalter und nicht der in einer der Eingangsleitungen vorhandene selbstsperrende Eingangsschalter. Grundsätzlich ist es aber, soweit in etwaigen Sperrpotentialleitungen selbstleitende Halbleiterschalter angeordnet sind, auch möglich, den selbstsperrenden Halbleiterschalter als den mit der hohen Frequenz getakteten Halbleiterschalter in einer der Eingangsleitungen zu verwenden. In diesem Fall machen sich aber die bei hochfrequenter Taktung höheren Schaltverluste üblicher selbstsperrender Halbleiterschalter negativ bemerkbar.

Die bisher beschriebenen Maßnahmen zielen darauf ab, einen Kurzschlussstrom zwischen den Eingangsleitungen zu vermeiden, wenn die Steuerspannungen von der Steuerung noch nicht an den Steueranschlüssen der selbstleitenden Halbleiterschalter der Teilschaltung zwischen den Eingangsleitungen anliegen oder ausfallen. Diese Maßnahmen können ausreichend sein; z. B. wenn die Wechselrichterbrücke eines Wechselrichters ausschließlich zu einer mit Wechselspannung betriebenen Last führt. Wenn an einem Wechselspannungsabgriffpunkt im Querzweig einer H-förmigen Wechselrichterbrücke jedoch eine externe Spannung, wie beispielsweise diejenige eines Wechselspannungsnetzes anliegt, muss auch verhindert werden, dass diese externe Wechselspannung über die selbstleitende Wechselrichterbrücke kurzgeschlossen wird. Zu diesem Zweck können beispielsweise in dem Querzweig einer solchen H-förmigen Wechselrichterbrücke selbstsperrende Halbleiterschalter spiegelsymmetrisch zu dem Wechselspannungsabgriffpunkt angeordnet sein, deren Steueranschlüsse die Steuerung im Betrieb des Wechselrichters ebenfalls mit Steuerspannungen ansteuert, die aber ohne diese Steuerspannungen sperren.

Um das höhere Sperrvermögen der selbstleitenden Halbleiterschalter auch beim Verhindern des Kurzschlusses der externe Wechselspannung über die selbstleitende Wechselrichterbrücke zu nutzen, können zwischen dem Wechselspannungsabgriffpunkt und dem jeweiligen selbstsperrenden Halbleiterschalter Sperrpotentialleitungen zu den Steueranschlüssen von mindestens zwei, z. B. von zwei diagonal angeordneten selbstleitenden Halbleiterschaltern der Wechselrichterbrücke führen. In diesen Sperrpotentialleitungen sind vorzugsweise Widerstände angeordnet, so dass die nach dem Entsperren der selbstsperrenden Halbleiterschalter verbleibenden Sperrpotentiale von der Steuerung beim Ansteuern der Steueranschlüsse, zu denen die Sperrpotentialleitungen führen, einfach überfahren werden können.

Alternativ zu Widerständen können in diesen Sperrpotentialleitungen andere, insbesondere ansteuerbare Schaltelemente, wie z. b. zusätzliche selbstleitende Halbleiterschalter angeordnet sein, deren Steueranschlüsse im Betrieb des neuen Wandlers von der Steuerung mit einer Steuerspannung angesteuert werden, um das Sperrpotential von den Steueranschlüssen, zu denen die Sperrpotentialleitungen führen, zu trennen

Zusätzlich können in diesen Sperrpotentialleitungen zwischen dem Wechselspannungsabgriffpunkt und den Steueranschlüssen, die auch über Sperrpotentialleitungen mit der Eingangsleitung verbunden sind, Sperrdioden angeordnet sein, um einen Stromfluss von der Eingangsleitung bis zu dem Wechselspannungsabgriffpunkt bzw. umgekehrt über die Sperrpotentialleitungen zu verhindern.

Die Schaltung des neuen Wandlers ermöglicht es insbesondere, für eine Teilschaltung zwischen den Eingangsleitungen auf selbstleitende Halbleiterschalter auf SiC-Basis zurückzugreifen und deren Vorteile maximal auszunutzen. Konkret können die selbstleitenden Halbleiterschalter Feldeffekttransistoren, insbesondere JFETs sein, die auf SiC-Basis zu vertretbaren Kosten verfügbar sind.

Der neue Wandler weist zwar neben selbstleitenden Halbleiterschaltern auch mindestens einen selbstsperrenden Halbleiterschalter auf. Dennoch kann der Vorteil der Temperaturbeständigkeit der selbstleitenden Halbleiterschalter voll ausgenutzt werden, wenn alle selbstsperrenden Halbleiterschalter des neuen Wandlers räumlich entfernt bzw. getrennt von den selbstleitenden Halbleiterschaltern angeordnet sind. Dies gilt ggf. auch für etwaige, beispielweise im Querzweig einer H-förmigen Wechselrichterbrücke angeordnete selbstsperrende Halbleiterschalter. An dieser Stelle ist darauf hinzuweisen, dass etwaig in dem Querzweig einer H-förmigen Wechselrichterbrücke angeordnete selbstsperrende Halbleiterschalter ebenfalls nicht notwendigerweise dazu vorgesehen sind, im Betrieb des neuen Wechselrichters getaktet zu werden, so dass die Wärmeerzeugung in ihnen verglichen mit derjenigen in den getakteten selbstleitenden Halbleiterschaltern nur gering ist.

Wenn der neue Wandler als DC/AC-Wandler ausgebildet ist, wobei ein Pufferkondensator zwischen den Eingangsleitungen parallel zu der Wechselrichterbrücke vorgesehen ist, ist dieser Pufferkondensator vorzugsweise vor dem Halbleiterschalter in der einen Eingangsleitung parallel zu der Wechselrichterbrücke zwischen die Eingangsleitungen geschaltet. Dies bewirkt, dass durch Sperrung der Wechselrichterbrücke mittels des Halbleiterschalters bei Ausfall der Steuerung auch verhindert wird, dass sich der Pufferkondensator unkontrolliert über die Wechselrichterbrücke entlädt. Bei räumlicher Trennung des Halbleiterschalters von der Wechselrichterbrücke liegt der Pufferkondensator somit jedoch ungünstig weit von der Wechselrichterbrücke entfernt. Es ist dann von Vorteil wenn hinter dem Halbleiterschalter ein weiterer Kondensator als Stützkondensator parallel zu der Wechselrichterbrücke zwischen die Eingangsleitungen geschaltet ist, der so den selbstleitenden Halbleiterschaltern räumlich zugeordnet ist. Dieser weitere Kondensator ist mit einer vergleichsweise kleinen Kapazität von maximal und regelmäßig weniger als einem Hundertstel der Kapazität des Pufferkondensators ausreichend dimensioniert und führt daher auch bei einem Kurzschluss der Wechselrichterbrücke nur zu einer begrenzten thermischen Belastung deren Halbleiterschalter. Ein solcher Stützkondensator ist auch bei der Ausführung des neuen Wandlers als Hochsetzsteller von Vorteil.

Bei Ausbildung des neuen Wandlers als DC/AC-Wandler kann in den Querzweig der Wechselrichterbrücke mindestens eine Induktivität geschaltet sein. Eine solche Induktivität kann auch auf beiden Seiten des dort vorgesehenen Wechselspannungsabgriffpunkts angeordnet sein. Hierbei handelt es sich um aus der DE 10 2004 030 912 B3 bekannte Maßnahme.

Ein gemäß der vorliegenden Erfindung ausgebildeter DC/AC-Wandler ist insbesondere in einem Wechselrichter zur Einspeisung von elektrischer Energie von einer Gleichspannungsquelle in ein Wechselspannungsnetz einsetzbar. Bei der Gleichspannungsquelle kann es sich um eine Batterie, eine Brennstoffzelle, einen Brennstoffzellenstapel oder dergleichen handeln. Ganz besonders bevorzugt ist die Gleichspannungsquelle eine Photovoltaikanlage. Dabei ermöglicht es der Aufbau des neuen Wechselrichters trotz der bei einer Photovoltaikanlage über Nacht einbrechenden Eingangsspannung, die Steuerung des Wechselrichters aus dieser Eingangsspannung zu versorgen. Aufgrund des in der einen Eingangsleitung angeordneten selbstsperrenden Halbleiterschalters fließt trotz der zwischen den Eingangsleitungen selbstleitenden Wechselrichterbrücke zwischen den Eingangsleitungen kein Kurzschlussstrom, der einen Aufbau einer für die Versorgung der Steuerung ausreichenden Spannung zwischen den Eingangsleitungen verhindern würde.

Wie bereits in der Einleitung der vorliegenden Beschreibung angesprochen wurde, kann ein erfindungsgemäßer Wandler und kann damit auch ein erfindungsgemäßer DC/AC-Wandler in unterschiedlichsten Umgebungen implementiert und dabei in verschiedenste größere Schaltungen integriert werden, wie Sie dem Fachmann grundsätzlich bekannt sind. Hierzu zählen unter anderem die Wechselrichtertopologien die unter den Stichworten H4, H5, Heric, 3-Level, 5-Level und Gonzales bekannt sind, sowie Gleichrichter für 3-phasige Eingangsspannungen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen entnehmen.

### KURZBESCHREIBUNG DER FIGUREN

Die Erfindung wird im Folgenden unter Bezugnahme auf die beigefügten Figuren anhand von Ausführungsbeispielen von Wandlern näher erläutert und beschrieben, wobei diese Wandler nicht alle unter die Patentansprüche fallen.
- **Fig. 1**: zeigt eine Schaltung eines nicht unter die Patentansprüche fallenden Hochsetzstellers, der einen selbstleitenden Halbleiterschalter zwischen zwei Eingangsleitungen aufweist, der aber dennoch in Bezug auf eine zwischen den Eingangsleitungen anliegende Eingangsgleichspannung selbstsperrend ist.
- **Fig. 2**: zeigt eine unter die Patentansprüche fallende Abwandlung der Schaltung gemäß Fig. 1 bezüglich der Ausbildung einer Sperrpotentialleitung zu dem Steueranschluss des selbstleitenden Halbleiterschalters.
- **Fig. 3**: zeigt eine Schaltung eines nicht unter die Patentansprüche fallenden einphasigen Wechselrichters, der in Bezug auf eine zwischen seinen Eingangsleitungen anliegende Eingangsgleichspannung selbstsperrend ist.
- **Fig. 4**: zeigt eine Schaltung eines Wechselrichters, der für eine an einem Wechselspannungsabgriffpunkt anliegende externe Wechselspannung selbstsperrend ist, wobei auch dieser Wechselrichter selbst nicht unter die Patentansprüche fällt, obwohl auch diese Schaltung für sich genommen vorteilhaft ist.
- **Fig. 5**: zeigt eine Schaltung eines nicht unter die Patentansprüche fallenden Wechselrichters, der die Maßnahmen zur Selbstsperrung bei den Wechselrichtern gemäß den Fig. 3 und 4 kombiniert.
- **Fig. 6**: zeigt eine Schaltung eines weiteren unter die Patentansprüche fallenden Wechselrichters, der sowohl bezüglich einer an seinen Eingangsleitungen anliegenden Gleichspannung als auch einer an seinem Wechselspannungsabgriffpunkt anliegenden Wechselspannung selbstsperrend ist und von der Lehre der DE 10 2004 030 912 B3 unter Verwendung von selbstleitenden SiC-JFETs als getakteten Halbleiterschaltern Gebrauch macht.
- **Fig. 7**: zeigt eine Schaltung eines nicht unter die Patentansprüche fallenden Tiefsetzstellers, der einen selbstleitenden Halbleiterschalter und einen davon getrennt angeordneten selbstsperrenden Halbleiterschalter aufweist; und
- **Fig. 8**: zeigt eine Schaltung eines weiteren nicht unter die Patentansprüche fallenden Tiefsetzstellers mit einem selbstleitenden Halbleiterschalter und einem davon getrennt angeordneten selbstsperrenden Halbleiterschalter.

### FIGURENBESCHREIBUNG

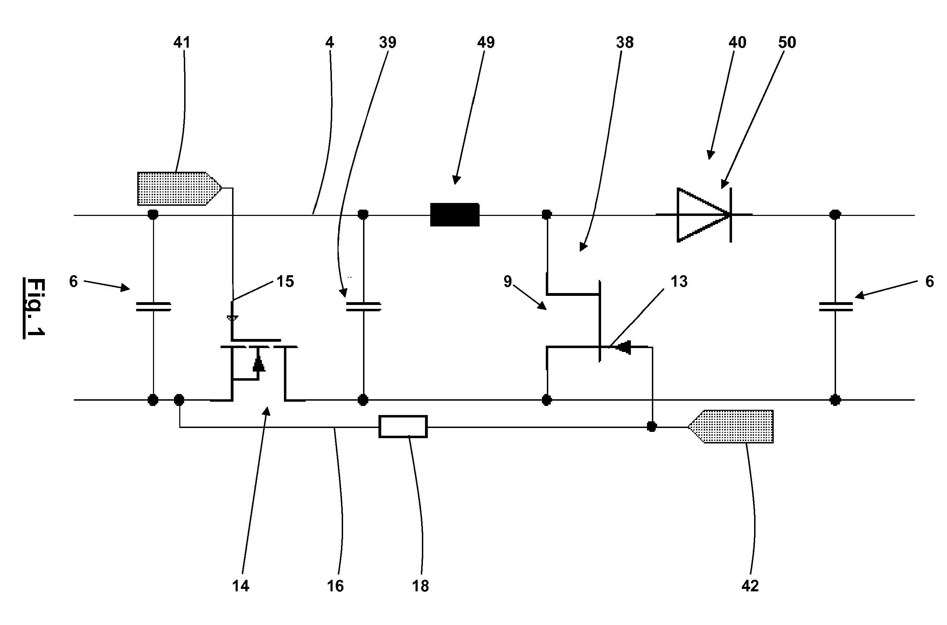

In **Fig. 1** ist eine nicht unter die Patentansprüche fallende Schaltung 40 für einen Hochsetzsteller 48 skizziert, die eine Teilschaltung 38 zwischen zwei Eingangsleitungen 4 und 5 aufweist. Die Teilschaltung 38 besteht hier aus einem einzigen Halbleiterschalter 9, der ohne Ansteuerung seines Steueranschlusses 13 selbstleitend ist. Um dennoch eine Selbstsperrung der Teilschaltung 38 zwischen den Eingangsleitungen 4 und 5 herbeizuführen, ist in der Eingangsleitung 5 ein selbstsperrender Halbleiterschalter 14 angeordnet. Dieser selbstsperrende Halbleiterschalter 14 wird erst dann von einer hier nicht separat dargestellten Steuerung der Schaltung 40 mit einer Steuerspannung 41 an seinem Steueranschluss 5 angesteuert, wenn die Steuerung auch Steuerspannungen 42 an den Steueranschluss 13 des Halbleiterschalters 9 bereitstellt. Ohne die Steuerspannungen 41 und 42 sperrt der Halbleiterschalter 14 den Stromfluss zwischen den Eingangsleitungen 4 und 5. Um dabei auch den hohen Sperrwiderstand und insbesondere die hohe Sperrspannfestigkeit des als SiCJFET ausgebildeten Halbleiterschalters 9 auszunutzen, zweigt von der Eingangsleitung 5 vor dem Halbleiterschalter 14 eine Sperrpotentialleitung 16 zu dem Steueranschluss 13 des Halbleiterschalters 9 ab. Diese beaufschlagt den Steueranschluss 13 mit einem Sperrpotential, solange der Halbleiterschalter 14 eine Spannung zwischen den Eingangsleitungen 4 und 5 sperrt. Damit dieses Sperrpotential nur solange wirksam ist, wie der Halbleiterschalter 14 sperrt, ist in der Sperrpotentialleitung 16 ein Widerstand 18 vorgesehen. Das nach dem Schließen des Halbleiterschalters 14 verbleibende, nicht über den Widerstand 18 abfallendes Potential kann beim Ansteuern des Steueranschluss 13 des Halbleiterschalters 9 mit dem Ansteuersignal 42 leicht überfahren werden. Bei der Schaltung 40 gemäß Fig. 1 wird der selbstleitende Halbleiterschalter 9 von der Steuerung direkt mit den Ansteuersignalen 42 angesteuert und kann damit beispielsweise für eine hochfrequente Variation des Stroms über die Teilschaltung 38 genutzt werden. Auch der selbstsperrende Halbleiterschalter 14 wird über das Ansteuersignal 41 von der Steuerung angesteuert. Dies geschieht aber üblicherweise nicht mit einer höheren Frequenz sondern mit einer konstanten Steuerspannung 41 über die Dauer des Betriebs der Schaltung 40 bzw. der Ansteuerung der Teilschaltung 38 durch die Steuerung mit den Steuerspannungen 42. Zur Bereitstellung einer Hochsetzfunktion für eine in Fig. 1 links zwischen den Eingangsleitungen 4 und 5 anliegende Spannung weist die Schaltung 40 eine Induktivität 49 und eine Diode 50 auf. Weiterhin sind ein eingangsseitiger und ein ausgangsseitiger Pufferkondensator 6 vorgesehen. Neben dem eingangsseitigen Pufferkondensator 6 ist zwischen dem selbstsperrenden Halbleiterschalter 14 und der Teilschaltung 38 mit dem selbstleitenden Halbleiterschalter 9 ein zusätzlicher Kondensator 39 zwischen die Eingangsleitungen 4 und 5 geschaltet, der als Stützkondensator dient.

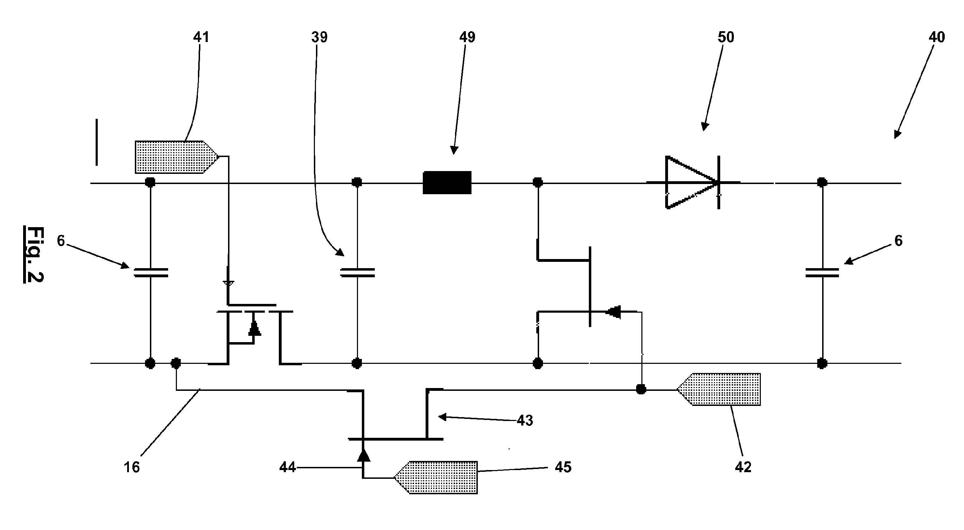

Fig. 2 zeigt eine Abwandlung der Schaltung 40 gemäß Fig. 1, bei der statt des Widerstands 18 gemäß Fig. 1 ein selbstleitender Halbleiterschalter 43 in der Sperrpotentialleitung 16 vorgesehen ist, der an seinem Steueranschluss 44 von der Steuerung mit einer Steuerspannung 45 angesteuert wird. D. h., solange die Steuerung noch nicht aktiv ist, führt die Sperrpotentialleitung 16 ein von dem selbstsperrenden Halbleiterschalter 14 aufgebautes Sperrpotential zu dem Steueranschluss 13 des Halbleiterschalters 9. Wenn die Steuerung aktiv ist, wird der Halbleiterschalter 43 hingegen durch die Steuerspannung 45 von der Steuerung gesperrt und öffnet damit die Sperrpotentialleitung 16. Die Steuerspannungen 41 und 45 können identisch sein.

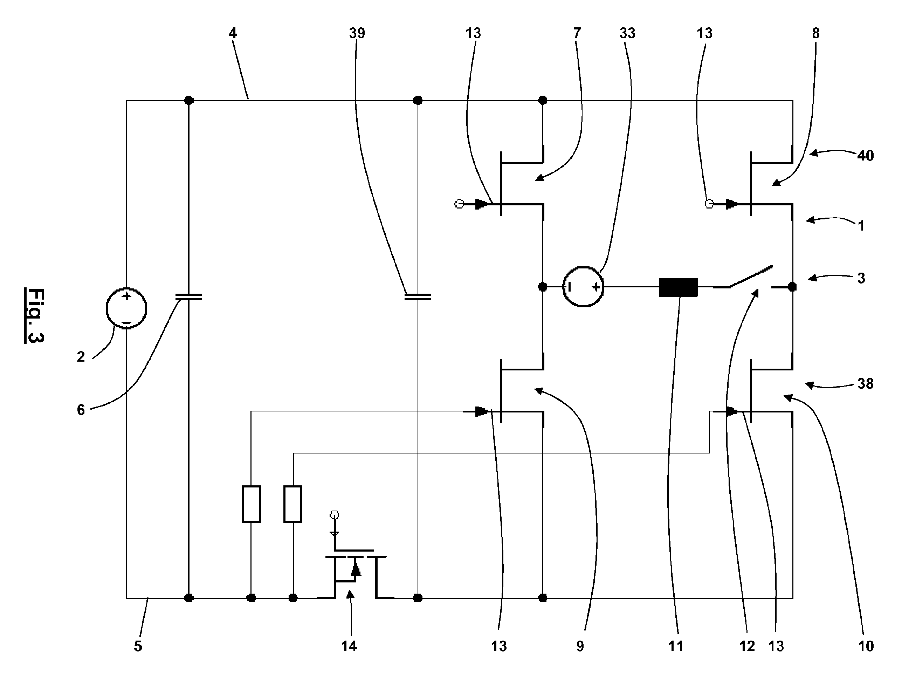

In **Fig. 3** ist die dieselben Prinzipien wie Fig. 1 anwendende nicht unter die Patentansprüche fallende Schaltung 40 eines Wechselrichters 1 skizziert, der eine Gleichspannung einer Gleichspannungsquelle 2 zwischen den Eingangsleitungen 4, 5 in eine Wechselspannung an einem Wechselspannungsabgriffpunkt 33 umrichtet. Dazu weist der Wechselrichter 1 eine H-förmige Wechselrichterbrücke 3 als Teilschaltung 38 zwischen den Eingangsleitungen 4 und 5 auf, an denen die Eingangsspannung der Gleichspannungsquelle 2 anliegt. Parallel zu der Wechselrichterbrücke ist ein Pufferkondensator 6 zur Bereitstellung einer Pufferkapazität für die Spannung zwischen den Eingangsleitungen 4 und 5 geschaltet. Die Wechselrichterbrücke 3 umfasst vier Halbleiterschalter 7-10, die jeweils in einer der von einer der Eingangsleitungen abgehenden Leitungen der Wechselrichterbrücke 3 angeordnet sind. In dem Querzweig, in dem der Wechselspannungsabgriffpunkt 33 liegt, sind eine Induktivität 11 zur Glättung des Wechselstroms und ein Schütz 12 zum Abkoppeln des Wechselspannungsabgriffpunkts 33 vorgesehen. Bei den Halbleiterschaltern 7-10 handelt es sich sämtlich um SiC-JFETs, die ohne Ansteuerung ihrer Steueranschlüsse 13 selbstleitend sind. Um trotz der damit insgesamt selbstleitenden Wechselrichterbrücke 3 eine Selbstsperrung des Wechselrichters 1 herbeizuführen, ist in der Eingangsleitung 5 der selbstsperrende Halbleiterschalter 14 in Form eines MOSFETs angeordnet. Dieser selbstsperrende Halbleiterschalter 14 wird erst dann von der Steuerung des Wechselrichters, die nicht separat dargestellt ist, mit einer Steuerspannung an seinem Steueranschluss 15 angesteuert, wenn die Steuerung auch Steuerspannungen an die Steueranschlüsse 13 der Halbleiterschalter 7-10 anlegt. Ohne derartige Steuerspannungen sperrt der Halbleiterschalter 14 den Stromfluss über die Wechselrichterbrücke 3. Um dabei den hohen Sperrwiderstand und insbesondere die hohe Sperrspannungsfestigkeit der SiC-JFETs 9 und 10 auszunutzen, zweigen von der Eingangsleitung 5 vor dem Halbleiterschalter 14 hier zwei Sperrpotentialleitungen 16 und 17 zu den Steueranschlüssen 13 dieser Halbleiterschalter 9 und 10 ab und beaufschlagen die Steueranschlüsse 13 mit Sperrpotentialen, solange der Halbleiterschalter 14 sperrt. Damit diese Sperrpotentiale nur so lange wirksam sind, wie der Halbleiterschalter 14 sperrt, sind in den Sperrpotentialleitungen 16 und 17 Widerstände 18 und 19 vorgesehen. Die nach dem Schließen des Halbleiterschalters 14 verbleibenden, nicht über den Widerständen 18 und 19 abfallenden Potentiale werden beim Ansteuern der Steueranschlüsse 13 der Halbleiterschalter 9 und 10 von der Steuerung leicht überfahren. Die bei dem Wechselrichter 1 bewirkte Selbstsperrung der Gleichspannungsseite wirkt nicht nur beim anfänglichen Aufbauen einer Spannung zwischen den Eingangsleitungen 4 und 5, beispielsweise am Morgen, wenn die Gleichspannungsquelle 2 eine Photovoltaikanlage ist, sondern auch bei einem plötzlichen Ausfall der Steuerung, und verhindert dann einen unkontrollierten Kurzschlussstrom über die Wechselrichterbrücke 3 mittels dessen sich die Ladungen auf dem Pufferkondensator 6 ansonsten ausgleichen würden. Da der Pufferkondensator 6 bei der Schaltung 40 gemäß Fig. 3 relativ weit von der Wechselrichterbrücke 3 entfernt sein kann, ist hinter dem Halbleiterschalter 14 ein weiterer Kondensator 39 als Stützkondensator parallel zu der Wechselrichterbrücke 3 zwischen die Eingangsleitungen 4 und 5 geschaltet. Dieser Kondensator 39 stellt seine Kapazität nahe der Wechselrichterbrücke 3 zur Verfügung, um das Auftreten großer Überspannungsspitzen beim Schalten der Halbleiterschalter 7 bis 10 der Wechselrichterbrücke 3 zu vermeiden. Dafür ist eine Kapazität des weiteren Kondensators 39 ausreichend, die maximal ein Hundertstel der Kapazität des Pufferkondensators 6 beträgt. Sie kann auch noch deutlich kleiner ausfallen.

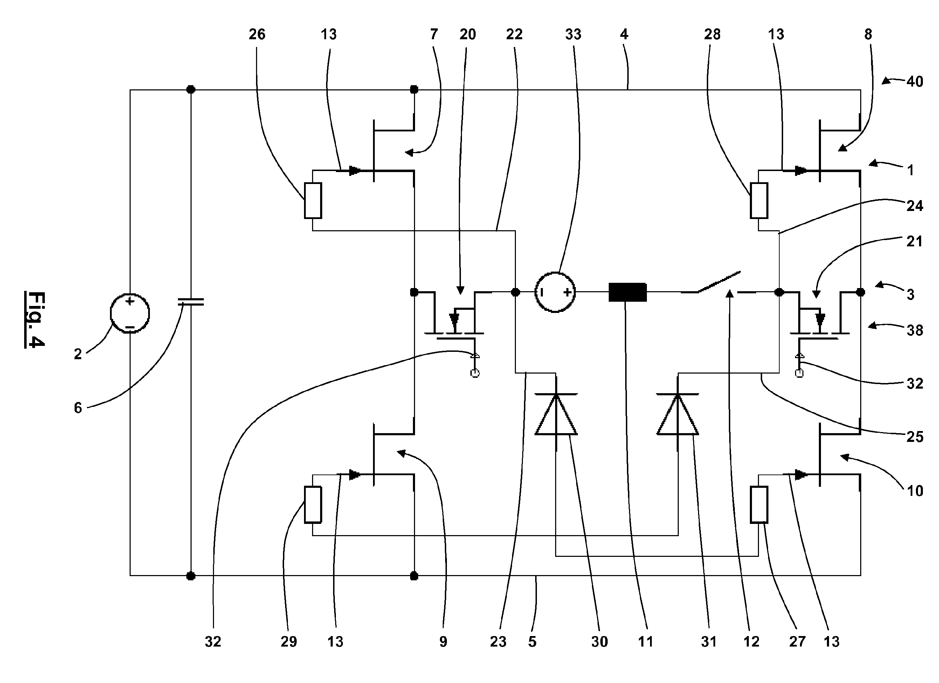

**Fig. 4** skizziert einen ebenfalls nicht unter die Patentansprüche fallenden Wechselrichter 1, bei dem ein ähnliches Prinzip wie in Fig. 3 vorgesehen ist, um die Wechselspannungsseite des Wechselrichters selbstsperrend auszubilden. Das heißt, es soll verhindert werden, das eine an dem Wechselspannungsabgriffpunkt 33 anliegende externe Wechselspannung über die Wechselrichterbrücke 3 kurzgeschlossen wird, falls beispielsweise der Schütz 12 gleichzeitig mit der Ansteuerung der Halbleiterschalter 7-10 versagt. Hierzu sind auf beiden Seiten des Wechselspannungsabgriffpunkts 33 in dem Querzweig der Wechselrichterbrücke 3 zwei selbstsperrende Halbleiterschalter 20 und 21 in spiegelsymmetrischer Anordnung vorgesehen. Jeder dieser Halbleiterschalter 20 und 21 ist als MOSFET ausgebildet und sperrt in einer Richtung. Um auch dabei auf den höheren Sperrwiderstand der SiC-JFETs 7-10 zurückzugreifen, gehen zwischen dem Wechselspannungsabgriffpunkt 33 und dem Halbleiterschalter 20 bzw. 21 Sperrpotentialleitungen 22 und 23 bzw. 24 und 25 zu den Steueranschlüssen 13 der diagonal angeordneten Halbleiterschalter 7 und 10 bzw. 8 und 9 ab. Auch in diesen Sperrpotentialleitungen 22-25 sind Widerstände 26-29 abgeordnet, um die Sperrpotentiale im gesteuerten Betrieb zu reduzieren, so dass sie bei der Ansteuerung des jeweiligen Steueranschlusses 13 von der hier nicht dargestellten Steuerung leicht überfahren werden können. Zusätzlich sind in den Sperrpotentialleitungen 23 und 25 Sperrdioden 30 und 31 vorgesehen, die für die Schaltung des Wechselrichters 1 gemäß Fig. 4 benötigt werden, um einen Stromfluss in die Steueranschlüsse 13 der beiden unteren Halbleiterschalter 9 und 10 zu verhindern.

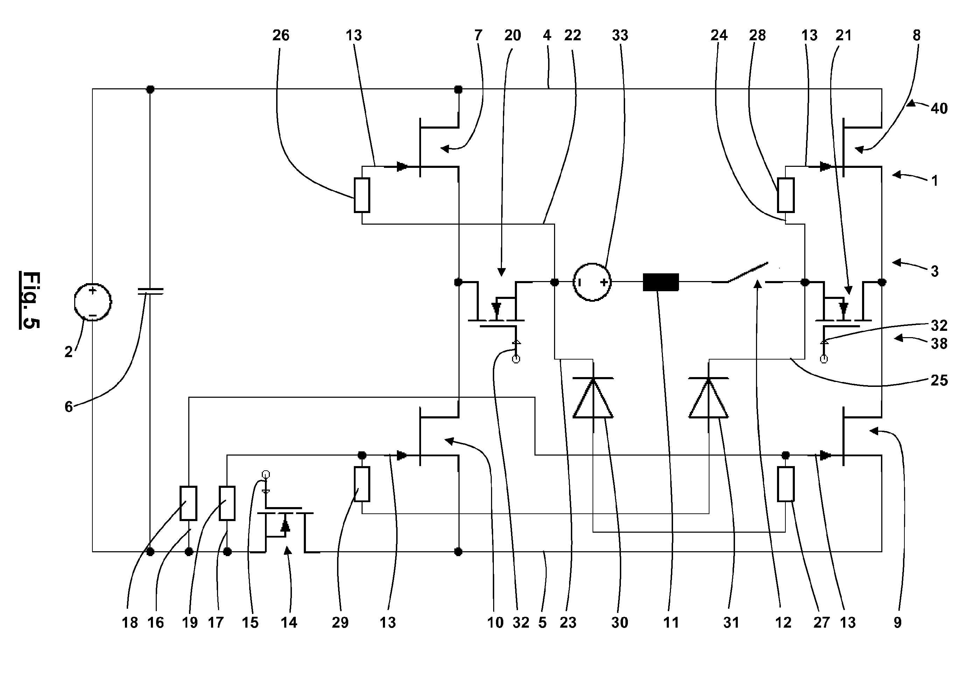

**Fig. 5** kombiniert die nicht unter die Patentansprüche fallenden Schaltungen 40 gemäß Fig. 3 und Fig. 4 bis auf den Kondensator 39 gemäß Fig. 3, der hier zwar der Übersicht halber weggelassen ist, aber auch zusätzlich vorhanden sein könnte, zu einem sowohl bezüglich einer Gleichspannung zwischen den Eingangsleitungen 4 und 5 als auch einer Wechselspannung an dem Wechselspannungsabgriffpunkt 33 selbstsperrenden Wechselrichter 1. Hier verhindern die Sperrdioden 30 und 31 einen Strom über die Beschaltungen der Steueranschlüsse 13 der Halbleiterschalter 9 und 10 in Form der Sperrpotentialleitungen 16 und 17 einerseits und der Sperrpotentialleitungen 23 und 25 andererseits.

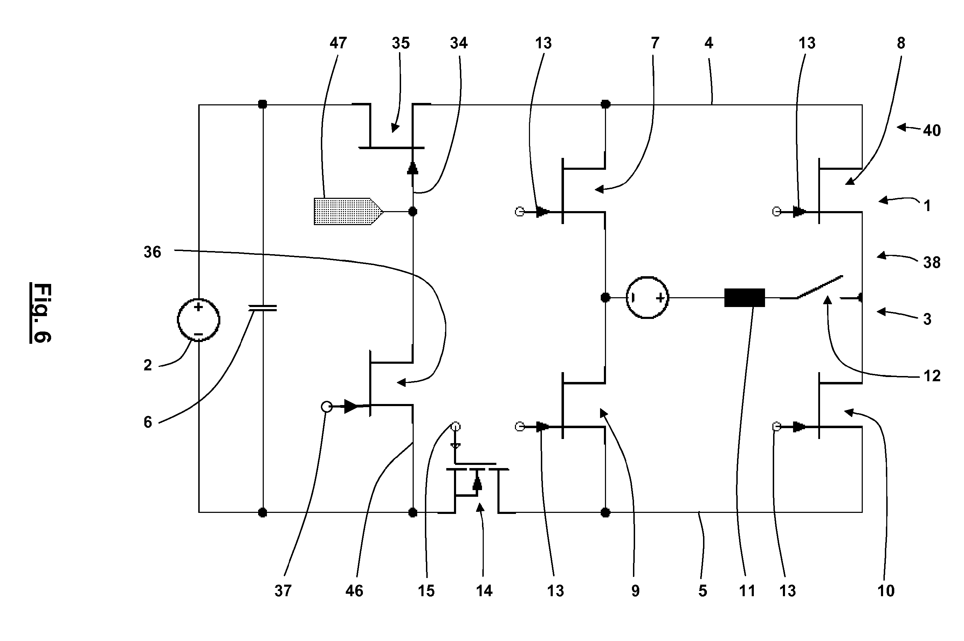

**Fig. 6** skizziert eine Modifikation des Wechselrichters 1 gemäß Fig. 3 im Hinblick auf die Selbstsperrung gegenüber einer Gleichspannung zwischen den Eingangsleitungen 4 und 5, wobei der Kondensator 39 hier wieder nur der Übersicht halber weggelassen ist. Statt der Sperrpotentialleitungen 16 und 17 zu den Steueranschlüssen 13 der Halbleiterschalter 9 und 10 ist hier nur eine Sperrpotentialleitung 46 zu dem Steueranschluss 34 eines selbstleitenden Halbleiterschalters 35 in der Eingangsleitung 4 vorgesehen. Statt eines Widerstands ist in der Sperrpotentialleitung 46 ein weiterer selbstleitender Halbleiterschalter 36 vorgesehen, dessen Steueranschluss 37 mit derselben Steuerspannung wie der Steueranschluss 15 des Halbleiterschalters 14 beaufschlagt wird, wenn die Selbstsperrung nicht mehr benötigt wird. Der zusätzliche selbstleitende Halbleiterschalter 35 kann gemeinsam mit den Halbleiterschaltern 9 und 10 mit Steuerspannungen 47 hoher Frequenz von der Steuerung getaktet werden, während die Halbleiterschalter 7 und 8 von der Steuerung mit einer niedrigeren Frequenz, auf die der Wechselrichter 1 richtet, getaktet werden, um insgesamt das aus der DE 10 2004 030 912 B3 bekannte Verfahren zu realisieren. Dabei wären dann alle getakteten Halbleiterschalter 9-13 und 35 selbstleitende SiC-JFETs. Dies träfe auch auf den Halbleiterschalter 36 zu. Nur der Halbleiterschalter 14 ist demgegenüber ein herkömmlicher selbstsperrender MOSFET, der aber nicht getaktet wird. Er kann räumlich getrennt von den temperaturunempfindlichen SiC-JFETs angeordnet werden und ganz auf einen niedrigen Durchlassverlust optimiert sein, so dass es in seinem Bereich nicht zu nennenswerter Wärmeentwicklung kommt. Ein gemäß der vorliegenden Erfindung auf einer selbstleitenden Wechselrichterbrücke 3 aus SiC-JFETs aufbauender Wechselrichter 1 weist eine hohe Temperaturstabilität und einen ebenfalls sehr hohen Wirkungsgrad bei relativ kleiner Anzahl der Halbleiterbauteile auf.

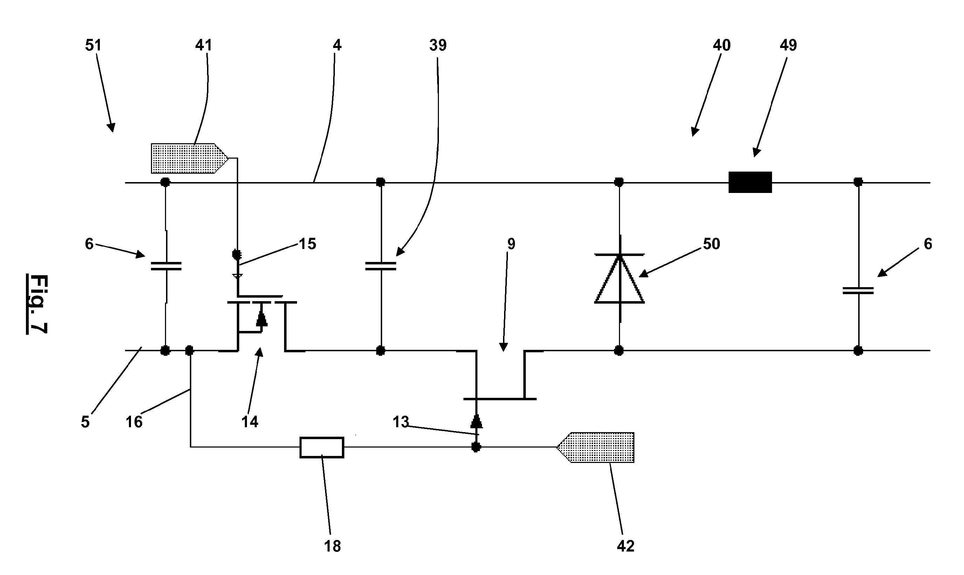

Bei einem nicht unter die Patentansprüche fallenden Tiefsetzsteller 51, dessen Schaltung 40 in Fig. 7 gezeigt ist, entspricht die Kombination aus dem selbstleitenden Halbleiterschalter 9 und dem in der Eingangsleitung 5 vorgesehenen selbstsperrenden Halbleiterschalter 14 im Prinzip Fig. 1. Hier ist aber der selbstleitende Halbleiterschalter 9 nicht zwischen den Eingangsleitungen 4 und 5 sondern ebenfalls in der Eingangsleitung 5 vorgesehen, und zwar hinter einer Verzweigung der Eingangsleitung 5 zu dem Kondensator 39 hin. Der Kondensator 39 sorgt dafür, dass auch dann, wenn der Halbleiterschalter 9 den Strom abschaltet, weiter Strom durch den Halbleiterschalter 14 fließen kann, und zwar in den Kondensator 39. Zur Bereitstellung der Tiefsetzfunktion weist die Schaltung 40 die Induktivität 49 in der Eingangsleitung 4 und zwischen den Eingangsleitungen 4 und 5 hinter dem Halbleiterschalter 9 die Diode 50 auf. Abweichend von der Standardschaltung eines Tiefsetzstellers ist dabei gemäß Fig. 7 der getaktete Schalter in Form des Halbleiterschalters 9 in der anderen Eingangsleitung als die Induktivität 49 vorgesehen.

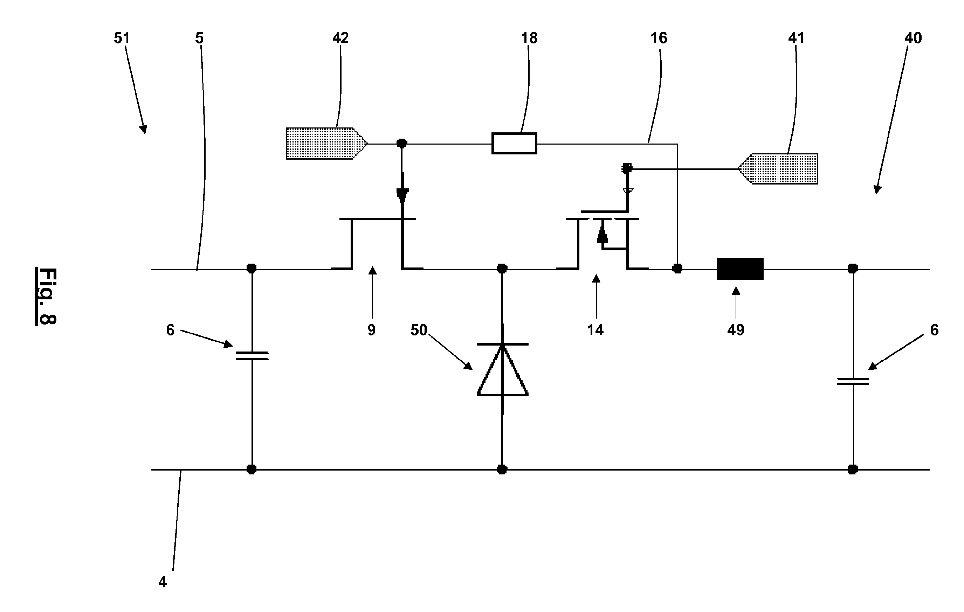

Dies ist bei der nicht unter die Patentansprüche fallenden Schaltung 40 für den Hochsetzsteller 51 gemäß **Fig. 8** nicht der Fall. Hier ist der Halbleiterschalter 9 ebenso wie die Induktivität 49 in der Eingangsleitung 5 angeordnet. Dabei ist aber der selbstsperrende Halbleiterschalter 14 hinter dem selbstleitenden Halbleiterschalter 9, d. h. zwischen dem selbstleitenden Halbleiterschalter 9 und der Induktivität 49, in der Eingangsleitung 5 angeordnet. Dazwischen verzweigt sich die Eingangsleitung 5 zu der Diode 50, die zwischen den Eingangsleitungen 4 und 5 angeordnet ist. Dies führt dazu, dass hier die Sperrpotenzialleitung 16 quasi von hinten zu dem Steueranschluss 13 des selbstleitenden Halbleiterschalters 9 führt. Bei dem Tiefsetzsteller 51 fließt der Strom ebenfalls fortgesetzt durch den Halbleiterschalter 14 und zwar entweder durch den Schalter 9 oder die Diode 50.

**BEZUGSZEICHENLISTE**

| | | | |
|---|---|---|---|
| 1 | Wechselrichter | 31 | Sperrdiode |
| 2 | Gleichspannungsquelle | 32 | Steueranschluss |
| 3 | Wechselrichterbrücke | 33 | Wechselspannungsabgriffpunkt |
| 4 | Eingangsleitung | 34 | Steueranschluss |
| 5 | Eingangsleitung | 35 | Halbleiterschalter |
| 6 | Pufferkondensator | 36 | Halbleiterschalter |
| 7 | Halbleiterschalter | 37 | Steueranschluss |
| 8 | Halbleiterschalter | 38 | Teilschaltung |
| 9 | Halbleiterschalter | 39 | Kondensator |
| 10 | Halbleiterschalter | 40 | Schaltung |
| 11 | Induktivität | 41 | Steuerspannung |
| 12 | Schütz | 42 | Steuerspannung |
| 13 | Steueranschluss | 43 | Halbleiterschalter |
| 14 | Halbleiterschalter | 44 | Steueranschluss |
| 15 | Steueranschluss | 45 | Steuerspannung |
| 16 | Sperrpotentialleitung | 46 | Sperrpotentialleitung |
| 17 | Sperrpotentialleitung | 47 | Steuerspannung |
| 18 | Widerstand | 48 | Hochsetzsteller |
| 19 | Widerstand | 49 | Induktivität |
| 20 | Halbleiterschalter | 50 | Diode |
| 21 | Halbleiterschalter | 51 | Tiefsetzsteller |
| 22 | Sperrpotentialleitung | | |
| 23 | Sperrpotentialleitung | | |
| 24 | Sperrpotentialleitung | | |
| 25 | Sperrpotentialleitung | | |
| 26 | Widerstand | | |
| 27 | Widerstand | | |
| 28 | Widerstand | | |
| 29 | Widerstand | | |
| 30 | Sperrdiode | | |

## Patentansprüche

1. Wandler für eine zwischen zwei Eingangsleitungen (4, 5) anliegende Gleichspannung, mit einer elektrischen Schaltung (40), die mindestens einen Halbleiterschalter (7-10, 35), der ohne Ansteuerung seines Steueranschlusses (13, 34) selbstleitend ist und der Bestandteil einer selbstleitenden Teilschaltung (38) zwischen den Eingangsleitungen (4, 5) ist, eine Steuerung, die den Halbleiterschalter (7-10, 35) im Betrieb des Wandlers taktet, indem sie seinen Steueranschluss (13, 34) mit Steuerspannungen (42, 47) ansteuert, und mindestens einen Halbleiterschalter (14), der ohne Ansteuerung seines Steueranschlusses (15) selbstsperrend ist, der in einer der Eingangsleitungen (5) angeordnet ist und dessen Steueranschluss (15) die Steuerung im Betrieb der Schaltung (40) ebenfalls mit einer Steuerspannung (41) ansteuert, den die Steuerung aber zumindest nicht unter Last taktet, aufweist, wobei der selbstsperrende Halbleiterschalter (14) von dem selbstleitenden Halbleiterschalter (7-10, 35) getrennt angeordnet ist, **dadurch gekennzeichnet, dass** von der Eingangsleitung (5) vor dem selbstsperrenden Halbleiterschalter (14) Sperrpotentialleitungen (16, 17, 46) zu den Steueranschlüssen (13) mindestens einer Teilmenge der selbstleitenden Halbleiterschalter (7-10) der Teilschaltung (38) führen, wobei die Halbleiterschalter (9, 10) der Teilmenge so ausgewählt sind, dass sie die Teilschaltung (38) sperren, wenn sie selbst durch Ansteuerung ihrer Steueranschlüsse (13) gesperrt sind, und dass in den Sperrpotentialleitungen (16) ansteuerbare Schaltelemente angeordnet sind, deren Steueranschlüsse (37) im Betrieb der Schaltung von der Steuerung mit einer Steuerspannung angesteuert werden.

2. Wandler nach Anspruch 1, **dadurch gekennzeichnet, dass** der selbstsperrende Halbleiterschalter (14) räumlich entfernt von allen selbstleitenden Halbleiterschaltern (7-10, 35, 36) angeordnet ist.

3. Wandler nach Anspruch 1 oder 2, **dadurch gekennzeichnet, dass** sich die Eingangsleitung (5), in der der selbstsperrende Halbleiterschalter (14) angeordnet ist, zwischen dem selbstsperrenden Halbleiterschalter (14) und dem selbstleitenden Halbleiterschalter (7-10) verzweigt, wobei der selbstsperrende Halbleiterschalter (14) optional außerhalb jedes Freilaufstromkreises des Wandlers angeordnet ist.

4. Wandler nach Anspruch 3, **dadurch gekennzeichnet, dass** vor dem selbstsperrenden Halbleiterschalter (14) in der einen Eingangsleitung (5) ein Pufferkondensator (6) zwischen die Eingangsleitungen (4, 5) geschaltet ist, wobei hinter dem selbstsperrenden Halbleiterschalter (14) ein weiterer Kondensator (39) zwischen die Eingangsleitungen (4, 5) geschaltet ist, der optional eine kleinere Kapazität als der Pufferkondensator aufweist, welche vorzugsweise maximal ein Hundertstel der Kapazität des Pufferkondensators (39) beträgt.

5. Wandler nach einem der Ansprüche 1 bis 4, **dadurch gekennzeichnet, dass** die Teilschaltung (38) eine selbstleitende Wechselrichterbrücke (3) mit selbstleitenden Halbleiterschaltern (7-10) ist, wobei die Sperrpotentialleitungen (16, 17) zu den Steueranschlüssen (13) von je einem selbstleitenden Halbleiterschalter (9, 10) je Zweig der Wechselrichterbrücke (3) führen, wobei diese Halbleiterschalter (9, 10) alle an eine der Eingangsleitungen (5) angeschlossen sind.

6. Wandler nach einem der Ansprüche 1 bis 5, **dadurch gekennzeichnet, dass** in den Sperrpotentialleitungen (16, 17) Widerstände (18, 19) angeordnet sind.

7. Wandler nach einem der Ansprüche 1 bis 6, **dadurch gekennzeichnet, dass** in den Sperrpotentialleitungen (16) selbstleitende Halbleiterschalter (43) angeordnet sind, deren Steueranschlüsse (44) im Betrieb der Schaltung (40) von der Steuerung mit einer Steuerspannung (45) angesteuert werden.

8. Wandler nach Anspruch 5 oder nach einem der von Anspruch 5 abhängigen Ansprüche, **dadurch gekennzeichnet, dass** die Steuerung einen Halbleiterschalter (35) in einer der Eingangsleitungen (4, 5) ebenso wie die Halbleiterschalter (9, 10), die in den von der anderen der Eingangsleitungen (4, 5) abgehenden Leitungen der Wechselrichterbrücke (3) angeordnet sind, mit einer hohen Frequenz taktet, während sie die Halbleiterschalter (7, 8), die in den von der einen Eingangsleitung (4) abgehenden Leitungen der Wechselrichterbrücke (3) angeordnet sind, mit einer niedrigeren Frequenz, auf die die Wechselrichterbrücke (3) richtet, taktet.

9. Wandler nach Anspruch 8, **dadurch gekennzeichnet, dass** der Halbleiterschalter (35) in der einen der Eingangsleitungen (4, 5) selbstleitend ist.

10. Wandler nach Anspruch 5 oder nach einem der von Anspruch 5 abhängigen Ansprüche, **dadurch gekennzeichnet, dass** im Querzweig zwischen den Zweigen einer H-förmigen Wechselrichterbrücke (3) zwei symmetrisch zu einem Wechselspannungsabgriffpunkt (33) angeordnete Halbleiterschalter (20, 21) vorgesehen sind, die ohne Ansteuerung ihrer Steueranschlüsse (32) selbstsperrend sind und deren Steueranschlüsse (32) die Steuerung im Betrieb des Wechselrichters (1) ebenfalls mit Steuerspannungen ansteuert.

11. Wandler nach Anspruch 10, **dadurch gekennzeichnet, dass** zwischen dem Wechselspannungsabgriffpunkt (33) und dem jeweiligen selbstsperrenden Halbleiterschalter (20, 21) Sperrpotentialleitungen (22-25) zu den Steueranschlüssen (13) von zwei diagonal angeordneten selbstleitenden Halbleiterschaltern (7, 8, 9, 10) der Wechselrichterbrücke (3) führen.

12. Wandler nach Anspruch 11, **dadurch gekennzeichnet,**
- **dass** in den Sperrpotentialleitungen (22-25) Widerstände (26-29) angeordnet sind und/oder
- **dass** in den Sperrpotentialleitungen (22-25) ansteuerbare Schaltelemente angeordnet sind, deren Steueranschlüsse im Betrieb der Schaltung von der Steuerung mit einer Steuerspannung angesteuert werden, und/oder
- **dass** in den Sperrpotentialleitungen (23, 25) zwischen dem Wechselspannungsabgriffpunkt (33) und den Steueranschlüssen (13), die auch über andere Sperrpotentialleitungen (16, 17) mit der Eingangsleitung (5) vor dem selbstsperrenden Halbleiterschalter (14) verbunden sind, Sperrdioden (30, 31) angeordnet sind.

13. Wandler nach einem der Ansprüche 1 bis 12, **dadurch gekennzeichnet,**
- **dass** zumindest die selbstleitenden Halbleiterschalter (7-10) der Teilschaltung (38) auf SiC-Basis ausgebildet sind und/oder
- **dass** zumindest die selbstleitenden Halbleiterschalter (7-10) der Teilschaltung (38) Feldeffekttransistoren sind und/oder
- **dass** die selbstleitenden Halbleiterschalter (7-10) der Teilschaltung (38) JFETs sind.

14. Verwendung eines Wandlers nach einem der Ansprüche 1 bis 13 in einem Wechselrichter (1) zur Einspeisung von elektrischer Energie von einer Gleichspannungsquelle (2) in ein Wechselstromnetz.

15. Verwendung nach Anspruch 14, **dadurch gekennzeichnet,**
- **dass** die Gleichspannungsquelle (2) eine Photovoltaikanlage ist und/oder
- **dass** die Gleichspannungsquelle (2) die Steuerung mit elektrischer Energie versorgt.

## Claims

1. Converter for a DC voltage present between two input lines (4, 5), comprising an electric circuitry (40) which comprises at least one semiconductor switch (7-10) which is normally on without controlling its gate (13, 34) and which is part of a normally on partial circuit (38) between the input lines (4, 5); a controller which pulse-operates the semiconductor switch (7-10, 35) in operation of the converter in that it controls the gate (13, 34) of the semiconductor switch (7-10, 35) by means of control voltages (42, 47); and at least one semiconductor switch (14) which is normally off without controlling its gate (15), which is arranged in one of the input lines (5), and whose gate (15) is also controlled by the controller in operation of the circuitry (14) by means of a control voltage (41) but which, at least under load, is not pulse-operated by the controller, wherein the normally off semiconductor switch (14) is spatially separated from the normally on semiconductor switch (7-10, 35), **characterized in that** blocking potential lines (16, 17) lead from the input line (5) upstream of the normally off semiconductor switch (14) to the gates (13) of at least a subset of the normally on semiconductor switches (7-10) of the partial circuit (38), wherein the semiconductor switches (9, 10) of the subset are selected in such a way that they block the partial circuit (38) when they are blocked by controlling their gates (13), and that controllable switching elements are arranged in the blocking potential lines (16), whose gates (37) are controlled in operation of the circuitry by the controller by means of a control voltage.

2. Controller of claim 1, **characterized in that** the normally off semiconductor switch (14) is arranged at a spatial distant to all normally on semiconductor switches (7-10, 35, 36).

3. Converter of claim 1 or 2, **characterized in that** the input line (5), in which the normally off semiconductor switch (14) is arranged, branches between the normally off semiconductor switch (14) and the normally on semiconductor switch (7-10), wherein the normally off semiconductor switch (14) is, optionally, arranged outside any free-wheeling current circuit of the converter.

4. Converter of claim 3, **characterized in that** a buffer capacitor (6) is connected between the input lines (4, 5) upstream of the normally off semiconductor switch (14) in the one input line (5), wherein a further capacitor (39) is connected between the input lines (4, 5) downstream of the normally off semiconductor switch (14) which, optionally, has a smaller capacitance than the buffer capacitor, the smaller capacitance preferably being a hundredth of the capacitance of the buffer capacitor (39) at maximum.

5. Converter of any of the claims 1 to 4, **characterized in that** the partial circuit (38) is a normally on inverter bridge (3) comprising normally on semiconductor switches (7-10), wherein the blocking potential lines (16, 17) lead to the gates (13) of one normally on semiconductor switch (9, 10) per branch of the inverter bridge (3), wherein these semiconductor switches (9, 10) are all connected to one of the input lines (5).

6. Converter of any of the claims 1 to 5, **characterized in that** resistors (18, 19) are arranged in the blocking potential lines (16, 17).

7. Converter of any of the claims 1 to 6, **characterized in that** normally on semiconductor switches (43) whose gates (44), in operation of the circuitry (40), are controlled by the controller by means of a control voltage (45) are arranged in the blocking potential lines (16).

8. Converter of claim 5 or of any of the claims depending on claim 5, **characterized in that** the controller pulse-operates a semiconductor switch (35) which is arranged in one of the input lines (4, 5) as well as the semiconductor switches (9, 10) which are arranged in lines of the inverter bridge (3) connected to the other of the input lines (4, 5) at a high frequency, whereas it pulse-operates the semiconductor switches (7, 8) which are arranged in the lines of the inverter bridge (3) connected to the other input line (4) at a lower frequency to which the inverter (3) inverts.

9. Converter of claim 8, **characterized in that** the semiconductor switch (35) in the one of the input lines (4, 5) is normally on.

10. Converter of claim 5 or of any of the claims depending on claim 5, **characterized in that** in a cross branch between the branches of a H-shaped inverter bridge (3) two semiconductor switches (20, 21) are provided in a symmetrical arrangement with regard to an AC voltage output (33), which are non-conductive without control of their gates (32) and whose gates (32) are also controlled by the controller in operation of the inverter (1) with control voltages.

11. Converter of claim 10, **characterized in that** blocking potential lines (22-25) lead from between the AC voltage output (33) and the respective normally off semiconductor switch (20, 21) to the gates (13) of two diagonally arranged normally on semiconductor switches (7, 8, 9, 10) of the inverter bridge (3).

12. Converter of claim 11, **characterized in**
- **that** resistors (26-29) are arranged in the blocking potential lines (22-25), and/or
- **that** controllable switching elements are arranged in the blocking potential lines (22-25), whose gates are controlled by the controller with a control voltage in operation of the circuitry, and/or
- **that** blocking diodes (30, 31) are arranged in the blocking potential lines (23, 25) between the AC voltage output (33) and the gates (13) which gates (13) are also connected to the input line (3) upstream of the normally off semiconductor switch (14) via other blocking potential lines (16, 17).

13. Converter of any of the claims 1 to 12, **characterized in**
- **that** at least the normally on semiconductor switches (7-10) of the partial circuit (38) are made on a SiC basis, an/or
- **that** at least the normally on semiconductor switches (7-10) of the partial circuit (38) are field effect transistors, and/or
- **that** the normally on semiconductor switches (7-10) of the partial circuit (38) are JFETs.

14. Use of a converter of any of the claims 1 to 13 in an inverter (1) for feeding electric energy from a DC voltage source (2) into an AC power grid.

15. Use of claim 14, **characterized in**
- **that** the DC voltage source (2) is a photovoltaic system and/or
- **that** the DC voltage source (2) supplies the controller with electric energy.

## Revendications

1. Convertisseur pour une tension continue appliquée entre deux lignes d'entrée (4, 5), avec un circuit électrique (40) comprenant au moins un commutateur à semi-conducteur (7-10, 35), qui est auto-conducteur sans pilotage de sa connexion de commande (13, 34) et qui fait partie d'un circuit partiel (38) auto-conducteur entre les lignes d'entrée (4, 5), un dispositif de commande qui cadence le commutateur à semi-conducteur (7-10, 35), lors du fonctionnement du convertisseur, du fait qu'il pilote sa connexion de commande (13, 34) avec des tensions de commande (42, 47) et au moins un commutateur à semi-conducteur (14), qui est autobloquant sans pilotage de sa connexion de commande (15), qui se trouve dans une des lignes d'entrée (5) et dont la connexion de commande (15) pilote également le dispositif de commande, lors du fonctionnement du circuit (40), avec une tension de commande (41), que le dispositif de commande ne cadence cependant pas au moins sous charge, le commutateur à semi-conducteur autobloquant (14) étant disposé séparément du commutateur à semi-conducteur auto-conducteur (7-10, 35), **caractérisé en ce que**, de la ligne d'entrée (5), avant le commutateur à semi-conducteur autobloquant (14), des lignes à potentiel de blocage (16, 17, 46) guident, vers les connexions de -commande (13), au moins une partie des commutateurs à semi-conducteurs (7-10) du circuit partiel (38), les commutateurs à semi-conducteurs (9, 10) de la quantité partielle étant sélectionnés de façon à ce qu'ils bloquent le circuit partiel (38) lorsqu'ils sont eux-mêmes bloqués par pilotage de leurs connexions de commande (13), et **en ce que**, dans les lignes à potentiel de blocage (16), se trouvent des éléments de commutation pilotables dont les connexions de commandes (37) sont pilotées, lors du fonctionnement du circuit, par le dispositif de commande, avec une tension de commande.

2. Convertisseur selon la revendication 1, **caractérisé en ce que** le commutateur à semi-conducteur autobloquant (14) est éloigné physiquement de tous les commutateurs à semi-conducteurs auto-conducteurs (7-10, 35, 36).

3. Convertisseur selon la revendication 1 ou 2, **caractérisé en ce que** la ligne d'entrée (5), dans laquelle se trouve le commutateur à semi-conducteur autobloquant (14), se ramifie entre le commutateur à semi-conducteur autobloquant (14) et le commutateur à semi-conducteur auto-conducteur (7-10), le commutateur à semi-conducteur autobloquant (14) étant, en option, disposé à l'extérieur de chaque circuit de roue libre du convertisseur.

4. Convertisseur selon la revendication 3, **caractérisé en ce que**, avant le commutateur à semi-conducteur autobloquant (14), dans la ligne d'entrée (5), un condensateur tampon (6) est branché entre les lignes d'entrée (4, 5), un autre condensateur (39) étant branché, après le commutateur à semi-conducteur autobloquant (14), entre les lignes d'entrée (4, 5), qui présente, en option, une capacité inférieure à celle du condensateur tampon, qui représente de préférence au maximum un centième de la capacité du condensateur tampon (39).

5. Convertisseur selon l'une des revendications 1 à 4, **caractérisé en ce que** le circuit partiel (38) est un pont onduleur auto-conducteur (3) avec des commutateurs à semi-conducteurs auto-conducteurs (7-10), les lignes à potentiel de blocage (16, 17) conduisant vers les connexions de commande (13) d'un commutateur à semi-conducteur auto-conducteur (9, 10) de chaque branche du pont onduleur (3), ces commutateurs à semi-conducteurs auto-conducteurs (9, 10) étant tous connectés à une des lignes d'entrée (5).

6. Convertisseur selon l'une des revendications 1 à 5, **caractérisé en ce que**, dans les lignes à potentiel de blocage (16, 17), se trouvent des résistances (18, 19).

7. Convertisseur selon l'une des revendications 1 à 6, **caractérisé en ce que**, dans les lignes à potentiel de blocage (16, 17), se trouvent des commutateurs à semi-conducteurs auto-conducteurs (43) dont les connexions de commande (44) sont pilotées, lors du fonctionnement du circuit (40), par le dispositif de commande avec une tension de commande (45).

8. Convertisseur selon la revendication 5 ou l'une des revendications dépendant de la revendication 5, **caractérisé en ce que** le dispositif de commande cadence un commutateur à semi-conducteur (35) dans une des lignes d'entrée (4, 5) ainsi que les commutateurs à semi-conducteurs (9, 10) se trouvant dans les lignes du pont onduleur (3) s'éloignant des autres lignes d'entrée (4, 5), avec une fréquence élevée tandis qu'il cadence les commutateurs à semi-conducteurs (7, 8) se trouvant dans les lignes du pont onduleur (3) s'éloignant de la ligne d'entrée (4), avec une fréquence plus basse, sur laquelle le pont onduleur (3) s'aligne.

9. Convertisseur selon la revendication 8, **caractérisé en ce que** le commutateur à semi-conducteur (35) est auto-conducteur dans une des lignes d'entrée (4, 5).

10. Convertisseur selon la revendication 5 ou l'une des revendications dépendant de la revendication 5, **caractérisé en ce que**, dans la branche transversale entre les branches d'un pont onduleur (3) en forme de H, se trouvent deux commutateurs à semi-conducteurs (20, 21) disposés de manière symétrique par rapport à une prise de tension alternative (33), qui sont autobloquant sans pilotage de leurs connexions de commande (32) et dont les connexions de commande (32) pilote également le dispositif de commande avec des tensions de commande lors du fonctionnement de l'onduleur (1).

11. Convertisseur selon la revendication 10, **caractérisé en ce que**, entre la prise de tension alternative (33) et le commutateur à semi-conducteur autobloquant (20, 21) correspondant, des lignes à potentiel de blocage (22-25) conduisent vers les connexions de commande (13) de deux commutateurs à semi-conducteurs auto-conducteurs (7, 8, 9, 10), disposés en diagonale, du pont onduleur (3).

12. Convertisseur selon la revendication 11, **caractérisé en ce que**,
- dans les lignes à potentiel de blocage (22-25), se trouvent des résistances (26-29) et/ou
- dans les lignes à potentiel de blocage (22-25), se trouvent des éléments de commutation pilotables dont les connexions de commande sont pilotées, lors du fonctionnement du circuit, par le dispositif de commande avec une tension de commande et/ou
- dans les lignes à potentiel de blocage (23, 25), entre la prise de tension alternative (33) et les connexions de commande (13), qui sont également reliées, par l'intermédiaire d'autres lignes à potentiel de blocage (16, 17), à la ligne d'entrée (5) avant le commutateur à semi-conducteur autobloquant (14), se trouvent des diodes de blocage (30, 31).

13. Convertisseur selon l'une des revendications 1 à 12, **caractérisé en ce que**
- au moins les commutateurs à semi-conducteurs auto-conducteurs (7-10) du circuit partiel (38) sont conçus à base de SiC et/ou
- au moins les commutateurs à semi-conducteurs auto-conducteurs (7-10) du circuit partiel (38) sont des transistors à effet de champ et/ou
- les commutateurs à semi-conducteurs auto-conducteurs (7-10) du circuit partiel (38) sont des JFET.

14. Utilisation d'un convertisseur selon l'une des revendications 1 à 13, dans un onduleur (1) pour l'introduction d'énergie électrique d'une source de tension continue (2) vers un réseau à courant alternatif.

15. Utilisation selon la revendication 14, **caractérisée en ce que**
- la source de tension continue (2) est une installation photovoltaïque et/ou
- la source de tension continue (2) alimente le dispositif de commande en énergie électrique.
